# EUROPÄISCHE PATENTANMELDUNG

(11) **EP 0 947 472 A1**
(43) Veröffentlichungstag der Anmeldung: **06.10.1999**
(21) Anmeldenummer: 99106079.9
(22) Anmeldetag: 26.03.1999
(51) Int. Cl.: C02F 3/16, B01F 7/16

(54) **Kreiselbelüfter**

(30) Priorität: 02.04.1998 DE 19814819
(71) Anmelder: Fuchs, Leonhard, Dipl.-Ing., 56727 St. Johann (DE); Fuchs, Martin, 56727 Mayen (DE)
(72) Erfinder: Fuchs, Leonhard, Dipl.-Ing., 56727 St. Johann (DE); Fuchs, Martin, 56727 Mayen (DE)
(74) Vertreter: Selting, Günther, Dipl.-Ing.

(57) **Zusammenfassung**

Kreiselbelüfter für den Sauerstoffeintrag in Flüssigkeiten, mit einem rotierend angetriebenen Laufrad (10) das einen mit vertikaler Achse angeordneten Scheibenkörper (11) aufweist, welcher an seiner Unterseite mit Schaufeln (12) versehen ist, wobei die Schaufeln (12) in radialem Abstand von dem Rand des Scheibenkörpers (11) enden.

## Beschreibung

Die Erfindung betrifft einen Kreiselbelüfter für den Sauerstoffeintrag in Flüssigkeiten.

Kreiselbelüfter werden dazu benutzt, Sauerstoff in wäßrige Flüssigkeiten, wie Abwasser, Brauchwasser oder Klärschlamm, einzutragen und dabei gleichzeitig die Flüssigkeit zu durchmischen. Ein Kreiselbelüfter hat ein in die Flüssigkeit eintauchendes, um eine vertikale Achse rotierend angetriebenes Laufrad, das Wasser mittig von unten ansaugt und radial über die Wasseroberfläche auswirft. Verschiedene Arten von Kreiselbelüftern sind in dem ATV-Handbuch "Biologische und weitergehende Abwasserreinigung", 4. Aufl., Verlag Ernst & Sohn, S. 393-397, beschrieben. Generell rotieren Kreiselbelüfter mit Drehzahlen von 20 bis 70 U/min. Die Randgeschwindigkeit solcher Kreiselbelüfter liegt je nach Durchmesser und Drehzahl im allgemeinen zwischen 3 und 6 m/s. Für solche Drehzahlen sind Getriebe erforderlich, die die Rotation eines schnellaufenden Elektromotors reduzieren.

Eine Sonderform der Oberflächenbelüfter mit vertikaler Welle stellen die Sprühstrahlbelüfter dar. Sprühstrahlbelüfter enthalten schnellaufende Propellerpumpen, die mit Drehzahlen um 1000 U/min. arbeiten und das Wasser gegen einen horizontalen Prallteller leiten, welcher es umlenkt und flach verspritzt. Nachteilig ist hierbei der geringe Sauerstoffertrag von etwa 1 kg O₂/kWh. Außerdem sind solche Systeme sehr empfindlich gegen Schwankungen der Eintauchtiefe.

Die bekannten Kreiselbelüfter, die mit niedrigen Drehzahlen betrieben werden, benötigen wegen der erforderlichen Drehzahluntersetzung relativ teure und schwere Getriebe. Auch die Tragkonstruktionen, wie Maschinenbrücken und Schwimmvorrichtungen, müssen entsprechend aufwendig gestaltet sein.

Bisher besteht also nur die Alternative, entweder einen aufwendigen und teuren Kreiselbelüfter zu wählen, der einen guten Sauerstoffertrag bietet, oder einen einfachen preisgünstigen Sprühstrahlbelüfter, der im Dauerbetrieb aber höhere Betriebskosten verursacht. Die Bemühungen, schnellerlaufende Kreiselbelüfter zu entwikkeln, sind bisher fehlgeschlagen, weil mit den bekannten Laufradformen ein hydrodynamisch stabiler Betrieb nicht erreichbar war.

Der Erfindung liegt die Aufgabe zugrunde, einen Kreiselbelüfter zu schaffen, der relativ hohe Drehzahlen ermöglicht und dabei ein stabiles Laufverhalten zeigt.

Die Lösung dieser Aufgabe erfolgt erfindungsgemäß mit den im Patentanspruch 1 angegebenen Merkmalen.

Bei dem erfindungsgemäßen Kreiselbelüfter enden die an der Unterseite des Laufrades vorgesehenen Schaufeln in radialem Abstand von dem Rand des Scheibenkörpers.

Durch Versuche hat sich überraschenderweise herausgestellt, daß diese zurückspringende Anordnung der Schaufeln einen stabilen hydrodynamischen Betrieb (stotterfrei) selbst bei relativ hohen Drehzahlen in der Größenordnung von über 100 U/min. bis 1.000 U/min. ermöglicht. Dadurch gelingt es, einen schnelldrehenden Kreiselbelüfter zu realisieren, der mit Drehzahlen über 100 U/min. laufen kann und wegen der hohen Drehzahl relativ kleinformatig und mit einem weniger aufwendigen Untersetzungsgetriebe hergestellt werden kann. Auch Direktantrieb unter Verwendung von hochpoligen Elektromotoren ist möglich. Bei gleicher Leistung ist wegen der höheren Drehzahl das Drehmoment niedriger als bei den üblichen Kreiselbelüftern, so daß die Bauart insgesamt schlanker und kleiner gemacht werden kann. Dadurch gelingt es, den hohen Sauerstoffertrag eines Kreiselbelüfters mit einer Vorrichtung von geringerem Gewicht zu erzielen.

Während die Kreiselbelüfter nach dem Stand der Technik offene oder geschlossene Laufräder haben, deren Schaufeln mindestens bis an den Rand des Scheibenkörpers reichen, meistens aber darüber hinausragen, sieht die Erfindung einen Überstand des Scheibenkörpers über die Schaufeln vor. Der physikalische Grund, warum dadurch hydrodynamische Instabilitäten bei höheren Drehzahlen verhindert werden, ist bisher nicht erforscht, jedoch ist die Wirkung erprobt. Der Kreiselbelüfter konnte mit Drehzahlen von über 100 U/min. und Umfangsgeschwindigkeiten am Rand des Plattenkörpers von mehr als 6 m/s betrieben werden, ohne daß der gleichmäßige Rundlauf instabil wurde.

Der Scheibenkörper des Laufrades hat einen von Schaufeln freien Randbereich, dessen Breite mindestens 5 %, vorzugsweise etwa 10 %, vom Durchmesser des Scheibenkörpers beträgt.

Gemäß einem anderen Aspekt der Erfindung, der selbständige Bedeutung hat, ist ein Kreiselbelüfter vorgesehen, bei dem die Schaufeln jeweils ihre maximale Höhe am radial äußeren Ende haben und dort mit einer Abreißkante enden. Die Schaufeln, die vertikal nach unten von dem Laufrad abstehen, werden nicht radial nach außen schmaler, wie dies beim Stand der Technik der Fall ist, sondern sie verbreitern sich, indem die Schaufelhöhe sich mit zunehmendem Abstand von der Drehachse vergrößert. Auch diese Merkmale tragen zu einem hydrodynamisch stabilen Lauf bei hohen Drehzahlen und zu einer ausgezeichneten Sprühwirkung bei. Dies wird darauf zurückgeführt, daß die radial außenliegenden Kanten des Laufrades weit in die Flüssigkeit eintauchen und zugleich als Abreißkanten wirken, die einen wesentlichen Teil der Versprühung verursachen.

Gemäß einer bevorzugten Weiterbildung der Erfindung sind die Schaufeln des Laufrades gekrümmt und die Drehrichtung des Laufrades ist derart, daß die konvexen Außenflächen der Schaufeln vorlaufen. Dies bedeutet, daß die Schaufeln die Flüssigkeit mit ihren konvexen Vorderflächen antreiben und dabei in einen Wirbel versetzen und gleichzeitig mit ihren Abreißkanten das axial angesaugte Wasser in Form von Tröpfchen, die sich mit Sauerstoff anreichern, abschleudern.

Der erfindungsgemäße Kreiselbelüfter zeigt im Einsatz hervorragende Betriebseigenschaften. Er ermöglicht einen stabilen flatterfreien Lauf bei hohem Sauerstoffertrag und damit entsprechend geringen Energiekosten.

Im folgenden wird unter Bezugnahme auf die Zeichnungen ein Ausführungsbeispiel der Erfindung näher erläutert.

Es zeigen:
- Fig. 1: eine Ansicht eines Kreiselbelüfters nach der Erfindung von unten,
- Fig. 2: einen Vertikalschnitt entlang der Linie II-II von Fig. 1,
- Fig. 3: eine Abwicklung einer der Schaufeln des Kreiselbelüfters und
- Fig. 4: eine Seitenansicht des im Einsatz befindlichen Kreiselbelüfters.

Der Kreiselbelüfter weist ein Laufrad 10 auf, das um eine vertikale Achse rotieren kann. Das Laufrad 10 besteht aus einem horizontalen Scheibenkörper 11, von dessen Unterseite Schaufeln 12 nach unten abstehen. Der Scheibenkörper 11 besteht hier aus einer flachen Platte aus Stahl und die Schaufeln 12 bestehen aus gebogenen Blechen, die senkrecht stoßend an den Scheibenkörper 11 angeschweißt sind. Es besteht aber beispielsweise auch die Möglichkeit, das Laufrad insgesamt als Formkörper auszugestalten, der gegossen oder gespritzt wird.

Die senkrecht von dem Scheibenkörper 11 nach unten abstehenden Schaufeln 12 sind jeweils bogenförmig gekrümmt. Es handelt sich um eine einachsige Krümmung um eine vertikale Krümmungsachse. Allerdings sind die Schaufeln 12 nicht zylindrisch gekrümmt, sondern nach Art einer logarithmischen Spirale, wobei der Krümmungsradius von innen nach außen zunimmt. Die Schaufelzahl beträgt vorzugsweise 4 bis 8. Jede Schaufel 12 erstreckt sich über einen Umfangswinkel von etwa 90° um die Achse 13 des Laufrades. Dabei beträgt der Austrittswinkel der Schaufel zwischen 20° und 70°, vorzugsweise etwa 45°.

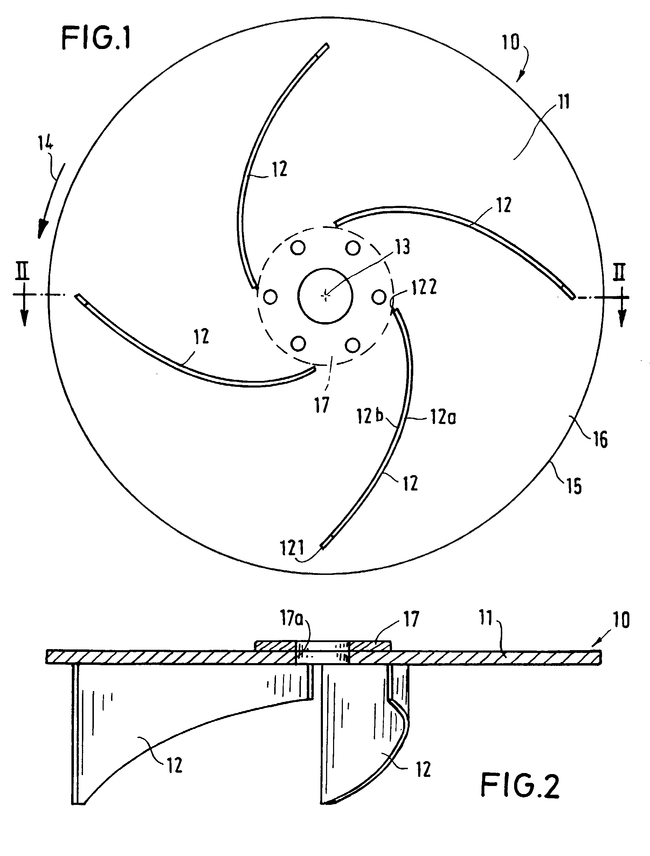

Jede Schaufel 12 hat eine konvexe Außenfläche 12a und eine konkave Innenfläche 12b. Der Drehantrieb des Schaufelrades erfolgt in Richtung des Pfeiles 14 nach Fig. 1 in der Weise, daß die konvexen Außenflächen 12a vorlaufen und die Flüssigkeit verdrängen.

Die Schaufeln 12 enden in radialem Abstand von dem Rand 15 des Scheibenkörpers 11, d.h. sie sind gegenüber dem Rand 15 zurückgesetzt. Der Randbereich 16, der von Schaufeln frei ist, hat eine Breite von mindestens 5 %, vorzugsweise von etwa 10 %, des Durchmessers des kreisförmigen Scheibenkörpers 11.

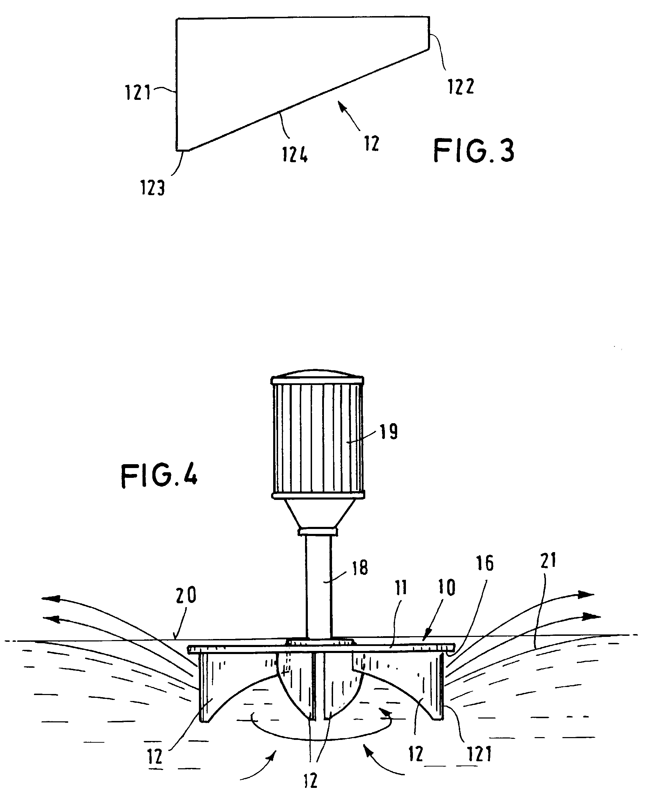

Eine Abwicklung einer Schaufel 12 ist in Fig. 3 dargestellt. Die Schaufel 12 hat am radial äußeren Ende 121 die größte Schaufelhöhe und am radial innenliegenden Ende 122 die geringste Schaufelhöhe. An das Ende 121 schließt sich ein Bereich 123 an, in dem die Schaufelhöhe konstant ist. Danach folgt bis zu dem Ende 122 ein linearer Bereich 124, in dem die Schaufelhöhe linear abnimmt.

Die größte Schaufelhöhe am Ende 121 beträgt bei einem praktischen Ausführungsbeispiel 120 mm, die geringste Schaufelhöhe am Ende 122 beträgt 30 mm und der Bereich 123 konstanter Schaufelhöhe beträgt 10 mm. Diese Schaufel ist Bestandteil eines Laufrades 10, dessen Scheibenkörper 11 einen Radius von 250 mm hat. Die Breite des schaufellosen Randbereichs 16 beträgt 25 mm und somit 10 % des Scheibenkörperradius.

Der lineare Abstand zwischen den vertikalen Enden 121 und 122 des Laufrades beträgt 222 mm und die Bogenlänge zwischen diesen Kanten beträgt 230 mm. Die Innenkanten sämtlicher Laufräder umschließen eine Nabe 17 des Laufrades, durch die sich eine vertikale Bohrung 17a für die Aufnahme der Antriebswelle erstreckt.

In Fig. 4 ist der Kreiselbelüfter mit Laufrad 10, Antriebswelle 18 und Antriebsmotor 19 dargestellt. Das Laufrad wird von (nicht dargestellten) Schwimmern, die den Motor 19 halten, so positioniert, daß die Oberfläche des Scheibenkörpers 11 sich in ruhendem Zustand im Bereich der Wasseroberfläche 20 oder darunter befindet.

Wenn der Motor 19 das Laufrad 10 in Drehung versetzt, bewirken die Schaufeln 12 ein axiales Ansaugen des Wassers von unten und eine wirbelnde Drehbewegung. Dadurch sinkt der Wasserstand im Bereich des Laufrades 11 und es entsteht ein rotierender Meniskus 21. Andererseits bewirken die Schaufeln 12 eine starke Durchmischung des Wassers, wobei Luft in das Wasser eingetragen wird, und ein radiales Fortschleudern des mit Luft angereicherten Wassers, insbesondere durch die Wirkung der langen Abrißkante 121 am äußeren Schaufelende.

Der beschriebene Kreiselbelüfter wird mit einer Drehzahl von mindestens 100 U/min. betrieben, wobei die Umfangsgeschwindigkeit am Laufrad größer ist als 6 m/s.

Bei dem beschriebenen Ausführungsbeispiel erstrecken sich die Schaufeln 12 gemäß Fig. 1 jeweils über einen Umfangsbereich von 90°, so daß jeweils eine Schaufel mit ihrem inneren Ende 122 auf demselben Radius liegt wie die benachbarte Schaufel 12 mit ihrem äußeren Ende 121.

Der Scheibenkörper 11 ist bei dem vorliegenden Ausführungsbeispiel eine flache Scheibe. Er kann jedoch an seiner Unterseite eine generell kegelförmige Struktur (mit nach unten gerichteter Spitze) haben oder auf ähnliche Weise konturiert sein, d.h. er muß nicht als flache Scheibe ausgebildet sein.

## Patentansprüche

1. Kreiselbelüfter für den Sauerstoffeintrag in Flüssigkeiten, mit einem rotierend angetriebenen Laufrad (10), das einen mit vertikaler Achse angeordneten Scheibenkörper (11) aufweist, welcher an seiner Unterseite mit Schaufeln (12) versehen ist,
**dadurch gekennzeichnet,**
daß die Schaufeln (12) in radialem Abstand von dem Rand des Scheibenkörpers (11) enden.

2. Kreiselbelüfter nach Anspruch 1, dadurch gekennzeichnet, daß der Scheibenkörper (11) einen von Schaufeln (12) freien Randbereich (16) aufweist, dessen Breite 5 % bis 30 %, vorzugsweise 10 % bis 20 %, vom Radius des Scheibenkörpers (11) beträgt.

3. Kreiselbelüfter nach Anspruch 1 oder 2, dadurch gekennzeichnet, daß die Umfangsgeschwindigkeit am Rand des Plattenkörpers (11) mehr als 6 m/s beträgt.

4. Kreiselbelüfter nach einem der Ansprüche 1-3, dadurch gekennzeichnet, daß die Drehzahl des Laufrades (10) mindestens 100 U/min. beträgt.

5. Kreiselbelüfter, insbesondere nach einem der Ansprüche 1-4, dadurch gekennzeichnet, daß die Schaufeln (12) jeweils ihre maximale Höhe am radial äußeren Ende (121) haben und dort mit einer Abreißkante enden.

6. Kreiselbelüfter nach Anspruch 5, dadurch gekennzeichnet, daß die Schaufelhöhe sich mit zunehmendem Abstand von der Drehachse (13) vergrößert.

7. Kreiselbelüfter nach Anspruch 5 oder 6, dadurch gekennzeichnet, daß die Schaufelhöhe am radial inneren Ende (122) der Schaufel (12) mindestens 10 % der maximalen Schaufelhöhe beträgt.

8. Kreiselbelüfter nach einem der Ansprüche 1-7, dadurch gekennzeichnet, daß die Schaufeln (12) gekrümmt sind und die Drehrichtung des Laufrades (10) derart ist, daß die konvexen Außenflächen (12a) der Schaufeln (12) vorlaufen.

9. Kreiselbelüfter nach einem der Ansprüche 1-8, dadurch gekennzeichnet, daß die maximale Schaufelhöhe 30 % bis 60 %, vorzugsweise 50 %, des Radius des Scheibenkörpers (11) beträgt.

10. Kreiselbelüfter nach einem der Ansprüche 1-9, dadurch gekennzeichnet, daß die Schaufeln (12) sich jeweils über einen Umfangsbereich von mindestens 30 % erstrecken.
